(19) Europäisches Patentamt
European Patent Office
Office européen des brevets

(11) **EP 4 478 330 A1**

(12) **EUROPEAN PATENT APPLICATION**
published in accordance with Art. 153(4) EPC

(43) Date of publication:
**18.12.2024 Bulletin 2024/51**

(21) Application number: **23861663.5**

(22) Date of filing: **30.06.2023**

(51) International Patent Classification (IPC):
**G08G 1/14** (2006.01)

(86) International application number:
**PCT/CN2023/104984**

(87) International publication number:
**WO 2024/221599 (31.10.2024 Gazette 2024/44)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **28.04.2023 CN 202310493262**

(71) Applicant: **Zhejiang Lab**
**Hangzhou City, Zheijiang Province 311121 (CN)**

(72) Inventors:
• **CHEN, Hongyang**
**Hangzhou**
**Zhejiang 311121 (CN)**
• **CAO, Rong**
**Hangzhou**
**Zhejiang 311121 (CN)**

(74) Representative: **Dai, Simin**
**Reyda IP**
**A073**
**157, Quai du Président Roosevelt**
**92130 Issy-les-Moulineaux (FR)**

(54) **METHOD AND APPARATUS FOR PREDICTING PARKING-SPACE IDLE RATE, AND MEDIUM AND DEVICE**

(57) Predicting parking space vacancy rate methods and apparatuses, storage media and devices, acquiring (S102) parking space vacancy rates of each of parking lots in the area to be predicted at a plurality of moments before the moment to be predicted as historical vacancy rates of each of the parking lots; obtaining (S104) a first feature by inputting the historical vacancy rates of each of the parking lots into the feature extraction network, wherein the first feature is used to characterize a relationship between the historical vacancy rates of each of the parking lots and time; obtaining (S108) a fusion feature by inputting the spatial relationship diagram and the first feature into the graph fusion network; and obtaining (S110) a parking space vacancy rate of each of the parking lots in the area to be predicted at the moment to be predicted by inputting the fusion feature into the result prediction network. Based on the relationship between parking space vacancy rate and time, the relationship between parking space vacancy rate and space, and a potential interaction between parking space vacancy rate and time and space, parking space vacancy rate prediction results of multiple parking lots in the area to be predicted are obtained at the same time, which improves the prediction efficiency and accuracy of the parking space vacancy rate.

FIG. 1

**Description**

**TECHNICAL FIELD**

The present disclosure relates to the field of computer technologies, and in particular to, parking space vacancy rate prediction methods and apparatuses, storage media and electronic devices.

**BACKGROUND**

With the development of technology, artificial intelligence has also developed rapidly. Machine learning models are also widely used in the field of traffic big data.

Generally, a machine learning model can be used to predict a parking space vacancy rate in a certain area, so that a driver can choose a parking space for parking a vehicle based on the predicted information. However, in the process of obtaining the model, it is necessary to consider not only a relationship between a parking space vacancy rate of parking lots in the area and time, but also a spatial correlation among each parking lot. Therefore, how to determine future parking space vacancy rates of a plurality of parking lots at the same time is a difficult problem.

Based on this, the present disclosure provides a method of predicting a parking space vacancy rate.

**SUMMARY**

The present disclosure provides parking space vacancy rate prediction methods and apparatuses, storage media and electronic devices.

The present disclosure adopts the following technical solution.

The present disclosure provides a method of predicting a parking space vacancy rate, being performed by a computing device, a pre-trained parking space vacancy rate prediction model is deployed in the computing device, and the parking space vacancy rate prediction model including a feature extraction network, a graph fusion network and a result prediction network, the method including:

> determining an area to be predicted and a moment to be predicted;
> acquiring parking space vacancy rates of each of parking lots in the area to be predicted at a plurality of moments before the moment to be predicted as historical vacancy rates of each of the parking lots;
> obtaining a first feature by inputting the historical vacancy rates of each of the parking lots into the feature extraction network, where the first feature is used to characterize a time-dependent relationship in the historical vacancy rates of each of the parking lots;
> constructing a spatial relationship diagram among each of the parking lots in the area to be predicted;
> obtaining a fusion feature by inputting the spatial relationship diagram and the first feature into the graph fusion network; and
> obtaining a parking space vacancy rate of each of the parking lots in the area to be predicted at the moment to be predicted by inputting the fusion feature into the result prediction network.

In some examples, before inputting the spatial relationship diagram and the first feature into the graph fusion network, the method further includes:

> obtaining a second feature by inputting the historical vacancy rates of each of the parking lots into the feature extraction network, where the second feature is used to characterize similarities of the historical vacancy rates of each of the parking lots; and
> where inputting the spatial relationship diagram and the first feature into the graph fusion network further includes:
> inputting the spatial relationship diagram, the first feature and the second feature into the graph fusion network.

In some examples, constructing a spatial relationship diagram among each of the parking lots in the area to be predicted specifically includes:
constructing the spatial relationship diagram by taking each of the parking lots in the area to be predicted as a node, and a distance between each of the parking lots in the area to be predicted as a weight of an edge.

In some examples, the graph fusion network includes: an attention network, and a graph convolution network; and
inputting the spatial relationship diagram, the first feature and the second feature into the graph fusion network includes:

> obtaining an output result weighted by attention by inputting the spatial relationship diagram, the first feature and the second feature into the graph fusion network; and
inputting the output result and the historical vacancy rates of each of the parking lots into the graph convolution network.

In some examples, the parking space vacancy rate prediction model further includes an environmental feature extraction;
where before inputting the fusion feature into the result prediction network, the method further includes:

acquiring environmental information of each of the parking lots in the area to be predicted before the moment to be predicted, where the environmental information at least includes weather information and holiday information; and
obtaining an environmental feature by inputting the environmental information into the environmental feature extraction network; and
where inputting the fusion feature into the result prediction network further includes:
inputting the first feature, the fusion feature, the environmental feature and the historical vacancy rates of each of the parking lots into the result prediction network.

In some examples, the parking space vacancy rate prediction model is trained by:

acquiring parking space vacancy rates of each of parking lots in a designated area for at least two historical moments;
taking a parking space vacancy rate of each of the parking lots at a latest historical moment among the at least two historical moments as a label, and taking a parking space vacancy rate of each of the parking lots at other historical moments as a sample;
obtaining a sample feature by inputting the sample into the feature extraction network, where the sample feature is used to characterize a relationship between the historical vacancy rate of each of the parking lots and time;
constructing a spatial relationship diagram among each of the parking lots in the designated area as a sample spatial relationship diagram;
obtaining a sample fusion feature by inputting the sample spatial relationship diagram and the sample feature into the graph fusion network;
obtaining a prediction result of each of parking space vacancy rates in the designated area at the latest historical moment by inputting the sample fusion feature into the result prediction network; and
training the parking space vacancy rate prediction model with an objective of minimizing a difference between the prediction result of each of the parking space vacancy rates and the label.

The present disclosure provides an apparatus for predicting a parking space vacancy rate, a pre-trained parking space vacancy rate prediction model being deployed in the apparatus for predicting the parking space vacancy rate, and the parking space vacancy rate prediction model including a feature extraction network, a graph fusion network and a result prediction network, the apparatus including:

a determining module, configured to determine an area to be predicted and a moment to be predicted;
an acquiring module, configured to acquire parking space vacancy rates of each of parking lots in the area to be predicted at a plurality of moments before the moment to be predicted as historical vacancy rates of each of the parking lots;
a first input module, configured to input the historical vacancy rates of each of the parking lots into the feature extraction network to obtain a first feature, where the first feature is used to characterize a time-dependent relationship in the historical vacancy rates of each of the parking lots;
a constructing module, configured to construct a spatial relationship diagram among each of the parking lots in the area to be predicted;
a second input module, configured to input the spatial relationship diagram and the first feature into the graph fusion network to obtain a fusion feature; and
an output module, configured to input the fusion feature into the result prediction network to obtain a parking space vacancy rate of each of the parking lots in the area to be predicted at the moment to be predicted.

In some examples, the first input module is specifically configured to input the historical vacancy rates of each of the parking lots into the feature extraction network to obtain a second feature, where the second feature is used to characterize similarities of the historical vacancy rates of each of the parking lots; and input the spatial relationship diagram, the first feature and the second feature into the graph fusion network.
In some examples, the constructing module is specifically configured to construct the spatial relationship diagram by taking each of the parking lots in the area to be predicted as a node, and a distance between each of the parking lots in the area to be predicted as a weight of an edge.

In some examples, the graph fusion network includes: an attention network, and a graph convolution network; and

the second input module is specifically configured to input the spatial relationship diagram, the first feature and the second feature into the graph fusion network to obtain an output result weighted by attention; and input the output result and the historical vacancy rates of each of the parking lots into the graph convolution network.

In some examples, the parking space vacancy rate prediction model further includes an environmental feature extraction;

the apparatus further includes: an environmental information input module;

the environmental information input module is specifically configured to acquire environmental information of each of the parking lots in the area to be predicted before the moment to be predicted as environmental information of each of the parking lots, where the environmental information at least includes weather information and holiday information; and input the environmental information into the environmental feature extraction network to obtain an environmental feature; and

the output module is specifically configured to input the first feature, the fusion feature, the environmental feature and the historical vacancy rates of each of the parking lots into the result prediction network.

In some examples, the apparatus further includes: a training module; and

where the training module is specifically configured to acquire parking space vacancy rates of each of parking lots in a designated area for at least two historical moments; take a parking space vacancy rate of each of the parking lots at a latest historical moment among the at least two historical moments as a label, and take a parking space vacancy rate of each of the parking lots at other historical moments as a sample; obtain a sample feature by inputting the sample into the feature extraction network, where the sample feature is used to characterize a relationship between the historical vacancy rate of each of the parking lots and time; construct a spatial relationship diagram among each of the parking lots in the designated area as a sample spatial relationship diagram; obtain a sample fusion feature by inputting the sample spatial relationship diagram and the sample feature into the graph fusion network; obtain a prediction result of each of parking space vacancy rates in the designated area at the latest historical moment by inputting the sample fusion feature into the result prediction network; and train the parking space vacancy rate prediction model with an objective of minimizing a difference between the prediction result of each of the parking space vacancy rates and the label.

The present disclosure provides a computer-readable storage medium, where a computer program is stored in the storage medium, and the computer program, when executed by a processor, realizes the above method of predicting the parking space vacancy rate.

The present disclosure provides an electronic device, including a memory, a processor and a computer program stored in the memory and capable of running on the processor, when the processor executes the program, realizes the above method of predicting the parking space vacancy rate.

At least one technical solution adopted in the present disclosure can achieve the following beneficial effects.

In the method of predicting the parking space vacancy rate according to the present disclosure, the parking space vacancy rates of each parking lot in the area to be predicted before the moment to be predicted can be input into the feature extraction network of the parking space vacancy rate prediction model to obtain the first feature for characterizing a time-dependent relationship of the parking space vacancy rate of each parking lot. And the spatial relationship diagram of each parking lot in the area to be predicted and the first feature are input into the graph fusion network to obtain the fusion feature for characterizing the parking space vacancy rate of each parking lot in relation to time and space. Then the fusion feature is input into the result prediction network of the parking space vacancy rate prediction model to obtain the parking space vacancy rate of each parking lot in the area to be predicted at the moment to be predicted. Therefore, based on the relationship between parking space vacancy rate and time, the relationship between parking space vacancy rate and space, and a potential interaction between parking space vacancy rate and time and space, parking space vacancy rate prediction results of multiple parking lots in the area to be predicted are obtained at the same time, which improves the prediction efficiency and accuracy of the parking space vacancy rate.

## BRIEF DESCRIPTION OF DRAWINGS

The accompanying drawings described herein are provided to provide a further understanding of the present disclosure and constitute a part of the present disclosure. Illustrative embodiments of the present disclosure and their descriptions are used to explain the present disclosure and do not constitute improper limitations on the present disclosure. In the accompanying drawings:

FIG. 1 is a schematic flowchart of a method of predicting a parking space vacancy rate according to an embodiment of the present disclosure;

FIG. 2 is a schematic diagram of a parking space vacancy rate prediction model according to an embodiment of the present disclosure;

FIG. 3 is a spatial relationship diagram of each parking lot according to an embodiment of the present disclosure;

FIG. 4 is a schematic diagram of an apparatus for predicting a parking space vacancy rate according to an embodiment of the present disclosure; and

FIG. 5 is a schematic diagram of an electronic device corresponding to FIG. 1 according to an embodiment of the present disclosure.

## DETAILED DESCRIPTION

In order to make the purposes, technical solutions and advantages of the present disclosure more clear, the technical solutions of the present disclosure will be described clearly and completely in the following in combination with specific embodiments of the present application and the corresponding accompanying drawings. Obviously, the described embodiments are only a part of the embodiments of the present disclosure, not the whole embodiments. Based on the embodiments in the present disclosure, all other embodiments obtained by those of ordinary skills in the art without making creative efforts belong to the protection scope of the present disclosure.

The technical solutions provided by various embodiments of the present application are described in detail below in conjunction with the accompanying drawings.

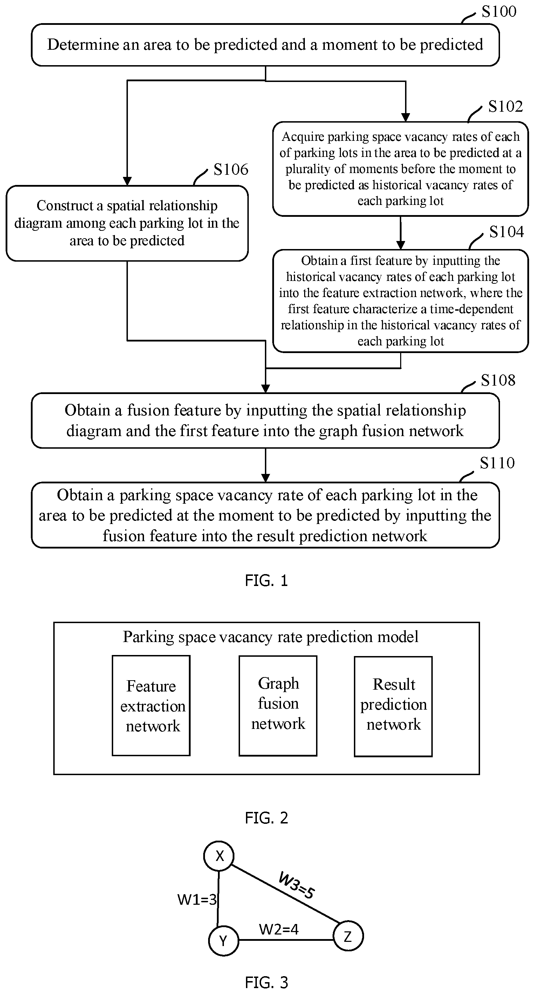

FIG. 1 is a schematic flowchart of a method of predicting a parking space vacancy rate according to an embodiment of the present disclosure, which may specifically include the following steps.

At step S100: an area to be predicted and a moment to be predicted are determined.

At step S102: parking space vacancy rates of each of parking lots in the area to be predicted at a plurality of moments before the moment to be predicted are acquired as historical vacancy rates of each of the parking lots.

An execution subject of the prediction method of the present disclosure can be any computing device with computing capability (such as a server and a terminal), and a pre-trained parking space vacancy rate prediction model is deployed in the computing device. The parking space vacancy rate prediction model includes: a feature extraction network, a graph fusion network and a result prediction network, as shown in FIG. 2.

Then, the computing device can determine the area to be predicted and the moment to be predicted. The area to be predicted and the moment to be predicted may be derived from a user's input, i.e., the user wants to know a parking space vacancy rate at the moment to be predicted and in the area to be predicted. Or, the area to be predicted can be an area where the user is currently located, and the moment to be predicted can be a current moment. That is to say, when the user is driving a vehicle, a real-time prediction can be performed according to the user's driving route. The area to be predicted and the moment to be predicted can also be preset, and the area to be predicted and the moment to be predicted are determined according to a preset time threshold and geographical area.

Furthermore, in order to determine a relationship between the parking space vacancy rate of each parking lot in the area to be predicted and time by the parking space vacancy rate prediction model, the computing device can acquire parking space vacancy rates of each parking lot in the area to be predicted before the moment to be predicted according to the area to be predicted and the moment to be predicted as historical vacancy rates of each parking lot. For example, if an area to be predicted is Area B of City A, and a moment to be predicted is 18:30 on April 19th, the computing device can acquire parking space vacancy rates of each parking lot in Area B of City A before 18:30 on April 19th. Assuming that there are three parking lots in Area B of City A, namely X, Y and Z, the computing device can acquire, at 18:29 on April 19th, a parking space vacancy rate of parking lot X being: 20%, a parking space vacancy rate of parking lot Y being: 30%, a parking space vacancy rate of parking lot Z being: 40%, and at 18:24 on April 19th, a parking space vacancy rate of parking lot X being: 19%, a parking space vacancy rate of parking lot Y being: 20% and a parking space vacancy rate of parking lot Z being: 20%.

When acquiring the parking space vacancy rates of each parking lot in the area to be predicted before the moment to be predicted, the parking space vacancy rates of each parking lot in the area to be predicted before the moment to be predicted can be acquired according to a preset duration. That is, a preset duration can be determined for sampling, and a sampling moment can be determined by predicting forward from the moment to be predicted according to the preset duration, and parking space vacancy rate of each parking lot at each sampling moment can be acquired. For example, if the preset duration is 5 minutes and the moment to be predicted is 18:50, the parking space vacancy rate of each parking lot can be acquired at 18:45, 18:40 and other moments.

It should be noted that it is not limited to specifically acquire the parking space vacancy rate of each parking lot in the area to be predicted at how many moments before the moment to be predicted, and it can be acquired as needed. For example, assuming that inputs required by the parking space vacancy rate prediction model are historical vacancy rates of each parking lot at five moments before the moment to be predicted, the historical vacancy rates of each parking lot at five moments before the moment to be predicted can be acquired. Moreover, the parking space vacancy rate is determined according to all parking spaces and available (vacant) parking spaces in each parking lot.

Moreover, the parking space vacancy rate of each parking lot is calculated according to all parking spaces and available (vacant) parking spaces in each parking lot.

At step S104: a first feature is obtained by inputting the historical vacancy rates of each of the parking lots into the feature extraction network, where the first feature is used to characterize a time-dependent relationship in the historical vacancy rates of each of the parking lots.

The computing device can input the historical vacancy rates of each parking lot into the feature extraction network in the parking space vacancy rate prediction model to obtain the first feature for characterizing the time-dependent relationship in the historical vacancy rates of each parking lot.

S106: a spatial relationship diagram among each of the parking lots in the area to be predicted is constructed.

In one or more embodiments of the present disclosure, after determining the area to be predicted and the moment to be predicted in the above step S100, in order to determine a relationship between the parking space vacancy rate of each parking lot in the area to be predicted and space, a spatial relationship diagram among each parking lot in the area to be predicted can be constructed.

When constructing the spatial relationship diagram, the spatial relationship diagram may be constructed by taking each of the parking lots in the area to be predicted as a node, and a distance between each of the parking lots in the area to be predicted as a weight of an edge. Following the above example, there are three parking lots X, Y, and Z in Area B of City A. Assuming that a distance from parking lot X to parking lot Y is 3 km, a distance from parking lot X to parking lot Z is 5 km, and a distance from parking lot Z to parking lot Y is 4 km, a spatial relationship diagram can be constructed as shown in FIG. 3.

It should be noted that when constructing the spatial relationship diagram, the distance between each parking lot is an actual distance, not a straight line distance. According to an electronic map of the area to be predicted, a shortest road connecting two parking lots can be determined, and a road topology diagram between each parking lot can be obtained. According to the road topology diagram, a distance between two parking lots is determined, and the distance is taken as a weight of a corresponding edge of the two parking lots in the spatial relationship diagram. Of course, a driving time between parking lots can also be used as a weight of an edge in the spatial relationship diagram. As an example and not a limitation, the weight may be a comprehensive consideration of actual distance, driving time or other influencing factors. For example, a map tool can be used to calculate the actual distance or driving time between two parking lots, or consider traffic congestion and other factors for comprehensive calculation.

In addition, when constructing the spatial relationship diagram, an adjacency matrix can also be used to represent a relationship between nodes (that is, parking lots), and elements in the adjacency matrix represent the weight between two nodes, where the elements in the adjacency matrix:

$$P_{ij} = \begin{cases} p_{ij}, & i \text{ is connected to } j \\ 0, & i \text{ and } j \text{ are disconnected} \end{cases},$$

$P_{ij}$ represents a weight of node i to node j, $p_{ij}$ represents connectivity or proximity, and a value of $p_{ij}$ can be normalized to 0-1. In some examples, a distance threshold can also be set, and edges are only established between nodes that are smaller than the distance threshold, resulting in the spatial relationship diagram.

At step S108: a fusion feature is obtained by inputting the spatial relationship diagram and the first feature into the graph fusion network.

After obtaining the first feature for characterizing a relationship between parking space vacancy rate of each parking lot in the area to be predicted and time, and the spatial relationship diagram of each parking lot in the area to be predicted, the computing device can input the spatial relationship diagram and the first feature into the graph fusion network to obtain the fusion feature for characterizing the parking space vacancy rate of each parking lot in relation to time and space.

The graph fusion network can include: an attention network, and a graph convolutional network (GCN). The attention network can enable the parking space vacancy rate prediction model pay attention to key parts selectively. The graph convolution network can combine features of the spatial relationship diagram with the first feature to output the fusion feature.

The spatial relationship diagram and the first feature can be input to the attention network, and obtain an output result weighted by attention. Furthermore, the output result and historical vacancy rates of each parking lot can be input into the graph convolution network to obtain the fusion feature.

It should be noted that when inputting the spatial relationship diagram and the first feature into the attention network, because the spatial relationship diagram characterizes an adjacency relationship using a matrix form, while the attention network deals with an operation between matrices, the first feature is converted into a matrix form similar to the adjacency matrix characterized by the spatial relationship diagram, e.g., perform a matrix multiplication calculation on the first feature and a transposition of the first feature, and a result of this matrix multiplication calculation, a subsequent calculated second feature matrix and spatial relationship diagram are then input into the attention network.

At step S110: a parking space vacancy rate of each of the parking lots in the area to be predicted at the moment to be predicted is obtained by inputting the fusion feature into the result prediction network.

The computing device may input the fusion feature and historical vacancy rates of each parking lot into the result prediction network to obtain the parking space vacancy rate of each of the parking lots in the area to be predicted at the moment to be predicted.

Following the above example: the area to be predicted is Area B of City A, and the moment to be predicted is 18:30 on April 19th, then the computing device can acquire parking space vacancy rates of each parking lot in Area B of City A before 18:30 on April 19th. Assuming that there are three parking lots in Area B of City A, namely X, Y and Z, the computing device can acquire, at 18: 29 on April 19th, a parking space vacancy rate of parking lot X being: 20%, a parking space vacancy rate of parking lot Y being: 30%, a parking space vacancy rate of parking lot Z being: 40%, and at 18: 24 on April 19th, a parking space vacancy rate of parking lot X being: 19%, a parking space vacancy rate of parking lot Y being: 20% and a parking space vacancy rate of parking lot Z being: 20%. Then the parking space vacancy rates of each parking lot (i.e., at 18:29 on April 19th, a parking space vacancy rate of parking lot X is: 20%, a parking space vacancy rate of parking lot Y is: 30%, a parking space vacancy rate of parking lot Z is: 40%, and at 18:24 on April 19th, a parking space vacancy rate of parking lot X is: 19%, a parking space vacancy rate of parking lot Y is: 20%, a parking space vacancy rate of parking lot Z is: 20%) and the fusion feature are input to the result prediction network, and prediction results that made by further assumptions are as follows: at 18:30 on April 19, a parking space vacancy rate of parking lot X is: 50%, a parking space vacancy rate of parking lot Y is: 70%, and a parking space vacancy rate of parking lot Z is: 40%.

In the above parking space vacancy rate prediction method according to the present disclosure as shown in FIG. 1, the parking space vacancy rates of each parking lot in the area to be predicted at a plurality of moments before the moment to be predicted can be input into the feature extraction network of the parking space vacancy rate prediction model to obtain the first feature for characterizing a time-dependent relationship of the parking space vacancy rate of each parking lot. And the spatial relationship diagram of each parking lot in the area to be predicted and the first feature are input into the graph fusion network to obtain the fusion feature for characterizing the parking space vacancy rate of each parking lot in relation to time and space. Then the fusion feature is input into the result prediction network of the parking space vacancy rate prediction model to obtain the parking space vacancy rate of each parking lot in the area to be predicted at the moment to be predicted. Since the parking space vacancy rate of a parking lot has a certain relationship not only with time, but also with a spatial location of each parking lot, that is, when there is a difference between time and spatial location, the parking space vacancy rate of each parking lot is different. Therefore, based on the relationship between parking space vacancy rate and time, the relationship between parking space vacancy rate and space, and a potential interaction between parking space vacancy rate and time as well as space, parking space vacancy rate prediction results of multiple parking lots in the area to be predicted are obtained at the same time, which improves the prediction efficiency and accuracy of the parking space vacancy rate.

In one or more embodiments of the present disclosure, if parking space vacancy rates of some parking lots are the same at one moment, a difference of parking space vacancy rates of these parking lots at the next moment is generally not too great. In order to improve an accuracy of a prediction result, similarities of the parking space vacancy rate of each parking lot at the same moment before the moment to be predicted can be calculated to give a model a hint, so that the model can determine similarities of parking space vacancy rates of each parking lot at the moment to be predicted based on the similarities of the parking space vacancy rate of each parking lot at the same moment before the moment to be predicted.

The feature extraction network may include a first feature extraction network and a second feature extraction network. The first feature extraction network is used to extract a first feature, which is used to characterize a relationship between historical vacancy rates of each parking lot and time, and the second feature extraction network is used to extract a second feature, which is used to characterize similarities of the historical vacancy rates of each parking lot. The historical vacancy rates of each parking lot can be input into the first feature extraction network to obtain the first feature, and the historical vacancy rates of each parking lot can be input into the second feature extraction network to obtain the second feature.

In one or more embodiments of the present disclosure, the first feature extraction network may be a gated recurrent unit (GRU), and the second feature extraction network may be a dynamic time warping (DTW).

Two gates may be included in the GRU: an update gate $z_t$ and a reset gate $r_t$. Generally speaking, the reset gate is used to determine an extent to which previous information is forgotten, while the update gate determines what information is to be forgotten and what new information needs to be added. An input $x_t$ (i.e., the parking space vacancy rate of each parking lot at moment t) is combined with the reset gate $r_t$ and a hidden state $h_{t-1}$ at a previous moment t-1 to calculate a candidate hidden state $\widetilde{h}_t$, indicating information that should be updated at moment t. The moment t may be a sampling moment prior to the moment to be predicted, and the moment t-1 may be a previous sampling moment adjacent to moment t. A hidden state $h_t$ (i.e., the first feature) is then obtained by a weighted average of the previous hidden state $h_{t-1}$ and the current candidate hidden state $\widetilde{h}_t$, where the weight is the update gate $z_t$. In this way, past and current information can be captured, allowing the GRU to capture a long-term dependence in an input sequence (i.e., parking space vacancy rates of each parking lot prior to the moment to be predicted). The update gate $z_t$, reset gate $r_t$, candidate hidden state $\widetilde{h}_t$, and hidden state $h_t$ can be calculated by the following formulas (1) to (4), respectively:

$$z_t = \sigma(W_z x_t + U_z h_{t-1} + b_z) \qquad (1)$$

$$r_t = \sigma(W_r x_t + U_r h_{t-1} + b_r) \qquad (2)$$

$$\widetilde{h}_t = \tanh(W_h x_t + U_h(r_t \odot h_{t-1}) + b_h) \qquad (3)$$

$$h_t = (1 - z_t)h_{t-1} + z_t * \widetilde{h}_t \qquad (4)$$

$\sigma$ and tanh are a sigmoid and a hyperbolic tangent activation function, respectively, and W_, U_, and b_ are learnable weights and intercept terms.

In one or more embodiments of the present disclosure, a node represents a parking lot that contains a plurality of parking spaces. Each parking lot has occupancy data at different moments. For example, to predict an occupancy rate at moment t=3, it is necessary to calculate a DTW distance by using occupancy rates between different parking lots at moment t=1 and 2. Therefore, in the second feature extraction network, the following formula (5) can be used to calculate a similarity of historical vacancy rates between two nodes:

$$DTW(X, Y) = \sqrt{\min_{\pi} \sum_{(i,j) \in \pi} d(X_i, Y_j)^2} \qquad (5)$$

X and Y represent the parking space vacancy rates corresponding to the two nodes before the moment to be predicted, and d() represents an Euclidean distance, a curved path $\pi$ can be found by using formula (5), so that a sum of squared distances between the two nodes corresponding to the parking space vacancy rates before the moment to be predicted is minimum, and then a minimum sum can be obtained. A value of DTW (X, Y) is a square root of this minimum sum, which indicates a similarity between the parking space vacancy rates of parking lots corresponding to the two nodes before the moment to be predicted. Furthermore, a similarity of historical vacancy rates needs to be calculated between every two nodes. If there are N nodes, then N^2 calculation results can be obtained to form an N*N matrix. As an example, when N=2 (including two nodes: X and Y), a square root of a minimum sum between the two nodes X and Y needs to be calculated 2^2 times (i.e., DTW(X, Y), DTW(X, X), DTW(Y, X), and DTW(Y, Y) need to be calculated, where values of DTW(X, X) and DTW(Y, Y) are 0), thus obtaining a 2^2 matrix, which will be used as the second feature.

Then in the above step S108, the first feature, the second feature and the spatial relationship diagram can be input into the graph fusion network to obtain the fusion feature. Specifically, the first feature, the second feature and the spatial relationship diagram can be input into the attention network in the graph fusion network to obtain an output result, and then the output result can be input into the graph convolution network to obtain the fusion feature.

When using the attention network, the attention network is used to selectively pay attention to specific part(s) of an input sequence when generating an output. A basic principle of the attention network is to weight each input element according to its importance to an output of a specific step. Therefore, the model can selectively focus on the most critical part of the input, while ignoring the less critical part. Attention calculation can be expressed by the following formula (6):

$$Attention(Q, K, V) = softmax\left(\frac{QK^T}{\sqrt{d_k}}\right)V \qquad (6)$$

Q can represent a result of calculation after performing matrix multiplication on the first feature, K can represent the second feature, and V can represent the spatial relationship diagram. $d_k$ represents a dimension of Q and K. Since the first feature is calculated according to the hidden state of the GRU, and it is a value of number of nodes * number of hidden layers, it needs to be further processed by matrix multiplication in order to become a format of number of nodes * number of nodes. A product of Q and K divided by a square root of their dimension helps stabilize a gradient during training. By using the attention network, the parking space vacancy rate prediction model can pay attention to different aspects of the first feature, the second feature and the spatial relationship diagram at the same time, extract temporal and spatial information, and finally get an output result weighted by attention. The accuracy and comprehensiveness of the parking space vacancy rate prediction model are improved.

Secondly, when using the GCN network, a method of spectral graph convolution is adopted, where a normalized graph Laplacian matrix is first calculated based on the fusion feature, which can be expressed by the following formula (7):

$$L = I - D^{-\frac{1}{2}} A_a^t D^{-\frac{1}{2}} \qquad (7)$$

where $D = diag(d_i)$ is a degree matrix, $d_i = \Sigma_j A_{ij}$ is a degree of an i-th node, where the node represents a node of a road topology diagram, that is, a parking lot, $A_{ij}$ is a collective name of the first feature, the second feature and the spatial relationship diagram, and $A_a^t$ represents the fusion feature. Convolution operation can be expressed by the following formula (8):

$$\widehat{\Theta}(L) = \sum_{k=0}^{K-1} \theta_k T_k(L) = \sum_{k=0}^{K-1} \theta_k C_k \qquad (8)$$

where, $C_k = s\tilde{L}C_{k-1} - C_{k-2}$, $C_0 = x$ and $C_1 = \hat{L}x = (2L\lambda_{max}^{-1} - I)x$.

In order to further simplify the calculation and avoid over-fitting, a first-order approximation of the graph Laplacian is generally used to calculate convolution, and a convolution layer operation finally used can be expressed by the following formula (9):

$$H^{l+1} = \sigma\left(\widehat{D}^{-\frac{1}{2}}\widehat{A}\widehat{D}^{-\frac{1}{2}}H^l W^l\right) + b^l \qquad (9)$$

where $\sigma$ is a rectified linear unit (ReLU).

With the attention network as well as the GCN network, temporal-spatial dependence can be effectively captured and the accuracy of prediction can be improved. Meanwhile, the attention network can enable the parking space vacancy rate prediction model pay attention to important parts of the input sequence, which enhances the generalization ability of the parking space vacancy rate prediction model.

Furthermore, in different environments, the parking space vacancy rate of each parking lot is different, that is, the parking space vacancy rate of each parking lot is affected by the environment. Therefore, in one or more embodiments of the present disclosure, the parking space vacancy rate prediction model further includes an environmental feature extraction network.

Before inputting the fusion feature into the result prediction network, the computing device may also acquire environmental information of each parking lot in the area to be predicted prior to the moment to be predicted. Then the environmental information is input into the environmental feature extraction network to obtain an environmental feature. Finally, the first feature, the fusion feature, environmental feature and historical vacancy rates of each parking lot are input into the result prediction network to obtain the parking space vacancy rate of each of the parking lots in the area to be predicted at the moment to be predicted.

The environmental information at least includes weather information and holiday information.

Moreover, in one or more embodiments of the present disclosure, the environmental feature extraction network can be a GRU, and the result prediction network can be a multilayer perceptron (MLP).

In addition, in one or more embodiments of the present disclosure, a method of training parking space vacancy rate prediction model is further provided.

Specifically, the computing device can acquire parking space vacancy rates of each of parking lots in a designated area for at least two historical moments, take a parking space vacancy rate of each of the parking lots at a latest historical moment among the at least two historical moments as a label, and taking a parking space vacancy rate of each of the parking lots at other historical moments as a sample. Then the sample is input into the environmental feature extraction network to obtain a sample feature, and constructs a spatial relationship diagram among each of the parking lots in the designated area as a sample spatial relationship diagram. Then, the sample spatial relationship diagram and the sample feature are input into the graph fusion network to obtain a sample fusion feature, and the sample fusion feature is input into the result prediction network to obtain a prediction result of parking space vacancy rates of each of the parking lots in the designated area at the latest historical moment. Finally, the parking space vacancy rate prediction model is trained with an objective of minimizing a difference between the prediction result of each parking space vacancy rate and the label. That is, parameters of the feature extraction network, the graph fusion network and the result prediction network are adjusted.

The sample feature is used to characterize a relationship between the historical vacancy rate of each of the parking lots and time.

It should be noted that when training the parking space vacancy rate prediction model, one sample can include the parking space vacancy rates of each parking lot at multiple historical moments.

In one or more embodiments of the present disclosure, when the feature extraction network includes a first feature extraction network and a second feature extraction network, the graph fusion network includes an attention network and a graph convolution network, and the parking space vacancy rate prediction model further includes an environmental feature extraction network, a sample can be input into the first feature extraction network to obtain a first sample feature, and input into the second feature extraction network to obtain a second sample feature. And a spatial relationship diagram for each of the parking lots in the designated area can be constructed. Then, a dot product result by performing a dot product between the first sample feature and the first sample feature, the second sample feature, and the spatial relationship diagram are input into the attention network to obtain a sample output result weighted by attention, and the sample output result is input into the graph convolution network to obtain a sample fusion feature.

In addition, the environmental information of each parking lot in the designated area can be obtained as sample environmental information. Then the sample environmental information is input into the environmental feature extraction network to obtain a sample environmental feature.

Finally, the sample fusion feature, the sample environment feature, the first sample feature and the sample are input into the result prediction network to obtain a prediction result of parking space vacancy rate of each of the parking lots in the designated area at the latest historical moment. And the parking space vacancy rate prediction model is trained with an objective of minimizing a difference between the prediction result of each parking space vacancy rate and the label.

That is, parameters of the first feature extraction network, the second feature extraction network, the attention network, the graph convolutional network, the environmental feature extraction network and the result prediction network are adjusted with the objective of minimizing the difference between the prediction result of each parking space vacancy rate and the label.

In one or more embodiments of the present disclosure, the predicted parking space vacancy rate of each parking lot in the area to be predicted can be published to a cloud, and a user can communicate with the computing device through the cloud to obtain the prediction result without calculation and storage on the computing device. It can improve the calculation efficiency and save the storage space.

In addition, parking space vacancy rate of each parking lot in the area to be predicted can be predicted for a plurality of moments in the future, so that the user can plan a travel route in advance according to his or her own travel needs and actual situations, avoiding the waste of time and resources, and improving the efficiency and quality of the traffic in the area to be predicted.

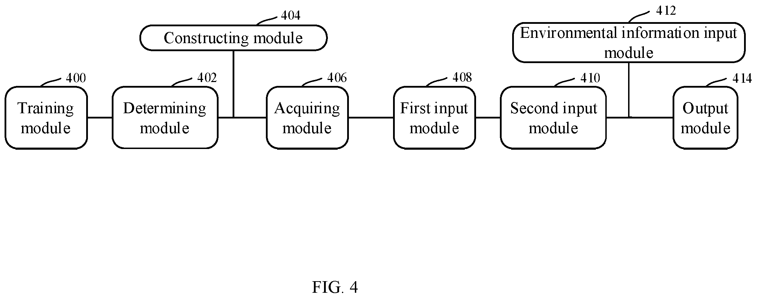

Based on the method of predicting the parking space vacancy rate described in the foregoing, embodiments of the present disclosure further correspondingly provide a schematic diagram of an apparatus for predicting the parking space vacancy rate, as shown in FIG. 4.

FIG. 4 is a schematic diagram of an apparatus for predicting a parking space vacancy rate according to an embodiment of the present disclosure, a pre-trained parking space vacancy rate prediction model is deployed in the apparatus for predicting the parking space vacancy rate, and the parking space vacancy rate prediction model includes a feature extraction network, a graph fusion network and a result prediction network, and the apparatus further includes:

a determining module 402, configured to determine an area to be predicted and a moment to be predicted;

an acquiring module 406, configured to acquire parking space vacancy rates of each of parking lots in the area to be predicted at a plurality of moments before the moment to be predicted as historical vacancy rates of each of the parking lots;

a first input module 408, configured to input the historical vacancy rates of each of the parking lots into the feature extraction network to obtain a first feature, where the first feature is used to characterize a time-dependent relationship in the historical vacancy rates of each of the parking lots;

a constructing module 404, configured to construct a spatial relationship diagram among each of the parking lots in the area to be predicted;

a second input module 410, configured to input the spatial relationship diagram and the first feature into the graph fusion network to obtain a fusion feature; and

an output module 414, configured to input the fusion feature into the result prediction network to obtain a parking space vacancy rate of each of the parking lots in the area to be predicted at the moment to be predicted.

In some examples, the first input module 408 is specifically configured to input the historical vacancy rates of each of the parking lots into the feature extraction network to obtain a second feature, where the second feature is used to characterize similarities of the historical vacancy rates of each of the parking lots; and input the spatial relationship diagram, the first feature and the second feature into the graph fusion network.

In some examples, the constructing module 404 is specifically configured to construct the spatial relationship diagram by taking each of the parking lots in the area to be predicted as a node, and a distance between each of the parking lots in the area to be predicted as a weight of an edge.

In some examples, the graph fusion network includes: an attention network, and a graph convolution network; the second input module 410 is specifically configured to input the spatial relationship diagram, the first feature and the second feature into the graph fusion network to obtain an output result weighted by Attention; and input the output result and the historical vacancy rates of each of the parking lots into the graph convolution network.

In some examples, the parking space vacancy rate prediction model further includes an environmental feature extraction;

the apparatus further includes: an environmental information input module 412;

the environmental information input module 412 is specifically configured to acquire environmental information of each of the parking lots in the area to be predicted before the moment to be predicted as environmental information of each of the parking lots, where the environmental information at least includes weather information and holiday information; and input the environmental information into the environmental feature extraction network to obtain an environmental feature;

the output module 414 is specifically configured to input the first feature, the fusion feature, the environmental feature and the historical vacancy rates of each of the parking lots into the result prediction network.

In some examples, the apparatus further includes: a training module 400;

where the training module 400 is specifically configured to acquire parking space vacancy rates of each of parking lots in a designated area for at least two historical moments; take a parking space vacancy rate of each of the parking lots at a latest historical moment among the at least two historical moments as a label, and take a parking space vacancy rate of each of the parking lots at other historical moments as a sample; obtain a sample feature by inputting the sample into the feature extraction network, where the sample feature is used to characterize a relationship between the historical vacancy rate of each of the parking lots and time; constructing a spatial relationship diagram among each of the parking lots in the designated area as a sample spatial relationship diagram; obtain a sample fusion feature by inputting the sample spatial relationship diagram and the sample feature into the graph fusion network; obtain a prediction result of each of parking space vacancy rates in the designated area at the latest historical moment by inputting the sample fusion feature into the result prediction network; and train the parking space vacancy rate prediction model with an objective of minimizing a difference between the prediction result of each of the parking space vacancy rates and the label.

Embodiments of the present disclosure further provide a computer-readable storage medium, and the computer-readable storage medium stores a computer program, which can be used to execute the method of predicting the parking space vacancy rate described above.

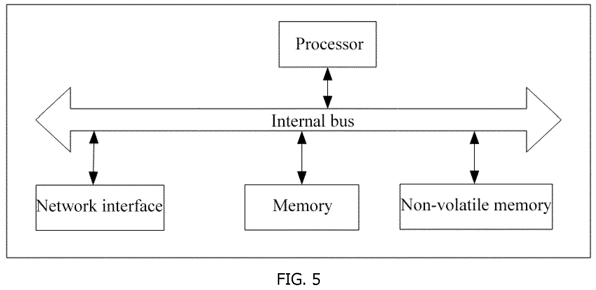

Based on the method of predicting the parking space vacancy rate described in the foregoing, embodiments of the present disclosure further provide a schematic structural diagram of the electronic device shown in FIG. 5. As shown in FIG. 5, at a hardware level, the electronic device includes a processor, an internal bus, a network interface, a memory and a non-volatile memory, and of course, it may further include hardware required by other services. The processor reads a corresponding computer program from the non-volatile memory into the memory and then runs it to realize the method of predicting parking space vacancy rates described in FIG. 1 above.

Of course, besides a software implementation, the present disclosure does not exclude other implementations, such as logic components or the combination of software and hardware, etc., that is to say, an execution subject of the following processing is not limited to each logic unit, but also can be hardware or logic components.

In the 1990s, an improvement of a technology can be clearly distinguished from an improvement of hardware (for example, an improvement of a circuit structure of diodes, transistors, switches, etc.) or an improvement of software (an improvement of a method flow). However, with the development of technology, the improvement of many method flows can be regarded as a direct improvement of hardware circuit structure. Designers almost always get a corresponding hardware circuit structure by programming an improved method flow into a hardware circuit. Therefore, it cannot be said that an improvement of a method flow cannot be realized by hardware entity modules. For example, programmable logic device (PLD) (for example, field programmable gate array (FPGA)) is such an integrated circuit, and its logic function is determined by user programming of components. Programmed by the designers to "integrate" a digital system on a PLD, without the need to ask a chip manufacturer to design and produce a special integrated circuit chip. Moreover, nowadays, instead of manually making integrated circuit chips, this programming is mostly changed to use "logic compiler" software, which is similar to a software compiler used in program development and writing, and an original code before compilation must be written in a specific programming language, which is called a hardware description language (HDL). There is not only one kind of HDL, but many kinds. Such as an advanced boolean expression language (ABEL), an altera hardware description language (AHDL), a Confluence, a Cornell University programming language (CupL), an HDCal, a java hardware description language (JHDL), a Lava, a Lola, a MyHDL, a PALASM, a ruby hardware description language (RHDL), etc. At present, a very-high-speed integrated circuit hardware description language (VHDL) and a Verilog are most commonly used. It should also be clear to those skilled in the art that hardware circuits implementing the logical method flow can be readily obtained by simply programming a method flow slightly with the above-mentioned hardware description language and programming into the integrated circuit.

A controller can be implemented in any suitable manner, for example, the controller may take a form of, for example, a microprocessor or processor and a computer-readable media storing computer-readable program code (e.g., software or firmware) that may be executed by a (micro) processor, a logic gate, a switch, an application specific integrated circuits (ASIC), a programmable logic controller, and an embedded microcontroller. Examples of controllers include, but are not limited to, the following microcontrollers: an ARC 625D, an Atmel AT91SAM, a Microchip PIC18F26K20, and a Silicone Labs C8051F320, and the memory controller may be implemented as part of the control logic of the memory. Those skilled in the art also know that, in addition to implementing the controller in the form of purely computer-readable program code, it is entirely possible to program the method steps logically to cause the controller to perform the same function in the form of logic gates, switches, special integrated circuits, programmable logic controllers, and embedded microcontrollers, etc. Therefore, this controller can be regarded as a hardware component, and an apparatus for realizing various functions included in it can also be regarded as a structure in the hardware component. Or even, the apparatus for realizing various functions can be regarded as both a software module for implementing the method and a structure in a hardware component.

The systems, apparatuses, modules or units illustrated in the above embodiments may specifically be realized by a computer chip or an entity, or by a product with a certain function. A typical implementation device is a computer. Specifically, the computer may, for example, be a personal computer, a laptop computer, a cellular telephone, a camera phone, a smartphone, a personal digital assistant, a media player, a navigation device, an e-mail device, a gaming console, a tablet computer, a wearable device, or a combination of any of these devices.

For the convenience of description, when describing the above apparatus, the functions are divided into various units and described separately. Of course, the functions of each unit can be implemented in the same or multiple software and/or hardware when the present disclosure is implemented.

It should be understood by those skilled in the art that embodiments of the present disclosure can be provided as a method, a system, or a computer program product. Therefore, the present disclosure can take the form of an entirely hardware embodiment, an entirely software embodiment, or an embodiment combining software and hardware aspects. Moreover, the present disclosure can take the form of a computer program product implemented on one or more computer-usable storage media (including but not limited to disk storage, CD-ROM, optical storage, etc.) containing computer-usable program codes.

The present disclosure is described with reference to flowcharts and/or block diagrams of methods, devices (systems), and computer program products according to the embodiments of the present disclosure. It should be understood that each flow and/or block in the flowcharts and/or block diagrams, and combinations of the flow and/or block in the flowcharts and/or block diagrams can be implemented by computer program instructions. These computer program instructions may be provided to a processor of a general-purpose computer, a special-purpose computer, an embedded processor or other programmable data processing device to produce a machine, such that instructions which are executed by a processor of the computer or other programmable data processing device produce an apparatus for implementing the functions specified in one or more flows of the flowcharts and/or one or more blocks of the block diagrams.

These computer program instructions may also be stored in a computer-readable memory that can direct a computer or other programmable data processing device to function in a particular manner, such that the instructions stored in the computer-readable memory produce an article of manufacture including an instruction apparatus that implements the functions specified in one or more flows of the flowcharts and/or one or more blocks of the block diagrams.

These computer program instructions may also be loaded onto a computer or other programmable data processing devices, such that a series of operational steps are performed on the computer or other programmable devices to produce a computer-implemented process, such that the instructions executed on the computer or other programmable devices provides steps for implementing the functions specified in one or more flows of the flowcharts and/or one or more blocks of the block diagrams.

In a typical configuration, a computing device includes one or more processors (CPUs), input/output interfaces, network interfaces, and memory.

The memory may include a non-permanent memory, a random access memory (RAM) in computer-readable media, and/or a non-volatile memory, such as a read only memory (ROM) or a flash RAM. The memory is an example of a computer-readable medium.

The computer-readable media, including permanent and non-permanent, removable and non-removable media, can store information by any method or technology. Information can be computer-readable instructions, data structures, modules of programs or other data. Examples of computer storage media include, but are not limited to, a phase change RAM (PRAM), a static random-access memory (SRAM), a dynamic random access memory (DRAM), other types of random access memory (RAM), a read-only memory (ROM), an electrically erasable programmable read-only memory (EEPROM), a flash memory or other memory technologies, a compact disc read-only memory (CD-ROM), a digital video disc (DVD) or other optical storage, magnetic cassette, magnetic tape and disk storage or other magnetic storage devices or any other non-transmission media that can be used to store information that can be accessed by computing devices. As defined herein, computer-readable media does not include temporary computer-readable media, such as modulated data signals and carrier carriers.

It should also be noted that the terms "including", "containing" or any other variations thereof are intended to cover non-exclusive inclusion, so that a process, method, commodity or device including a series of elements not only includes those elements, but also includes other elements not explicitly listed or elements inherent to such process, method, commodity or device. Without further limitations, an element defined by the phrase "including one" does not exclude the existence of other identical elements in the process, method, commodity or device including the element.

It should be understood by those skilled in the art that embodiments of the present disclosure can be provided as a method, a system, or a computer program product. Therefore, the present disclosure can take the form of an entirely hardware embodiment, an entirely software embodiment, or an embodiment combining software and hardware aspects. Moreover, the present disclosure can take the form of a computer program product implemented on one or more computer-usable storage media (including but not limited to disk storage, CD-ROM, optical storage, etc.) containing computer-usable program codes.

The present disclosure can be described in the general context of computer executable instructions executed by a computer, such as a program module. Generally, the program module includes a routine, a program, an object, a component, a data structure, etc. that performs particular tasks or implements particular abstract data types. The present disclosure may also be practiced in distributed computing environments where tasks are performed by remote processing devices that are connected via a communication network. In a distributed computing environment, the program module may be located in local and remote computer storage media including a storage device.

Each embodiment in the present disclosure is described in a progressive way, and the same and similar parts between the various embodiments can be referred to each other, and each embodiment focuses on the differences with other embodiments. Especially, for the system embodiment, because it is basically similar to the method embodiment, the description is relatively simple, and the relevant points can be found in part of the description of the method embodiment.

The above is only embodiments of the present disclosure and is not intended to limit the present disclosure. Various modifications and variations of the present disclosure will occur to those skilled in the art. Any modifications, equivalent substitutions, improvements, etc. made within the spirit and principle of the present disclosure should be included in the scope of the claims of the present disclosure.

## Claims

1. A method of predicting a parking space vacancy rate, being performed by a computing device, a pre-trained parking space vacancy rate prediction model being deployed in the computing device, and the parking space vacancy rate prediction model comprising a feature extraction network, a graph fusion network and a result prediction network, the method comprising:

    determining an area to be predicted and a moment to be predicted;
    acquiring parking space vacancy rates of each of parking lots in the area to be predicted at a plurality of moments before the moment to be predicted as historical vacancy rates of each of the parking lots;
    obtaining a first feature by inputting the historical vacancy rates of each of the parking lots into the feature extraction network, wherein the first feature is used to characterize a time-dependent relationship in the historical vacancy rates of each of the parking lots;
    constructing a spatial relationship diagram among each of the parking lots in the area to be predicted;
    obtaining a fusion feature by inputting the spatial relationship diagram and the first feature into the graph fusion network; and
    obtaining a parking space vacancy rate of each of the parking lots in the area to be predicted at the moment to be predicted by inputting the fusion feature into the result prediction network.

2. The method according to claim 1, wherein before inputting the spatial relationship diagram and the first feature into the graph fusion network, the method further comprises:

    obtaining a second feature by inputting the historical vacancy rates of each of the parking lots into the feature extraction network, wherein the second feature is used to characterize similarities of the historical vacancy rates of each of the parking lots; and
    wherein inputting the spatial relationship diagram and the first feature into the graph fusion network further comprises:
inputting the spatial relationship diagram, the first feature and the second feature into the graph fusion network.

3. The method according to claim 1 or 2, wherein constructing the spatial relationship diagram among each of the parking lots in the area to be predicted specifically comprises:
constructing the spatial relationship diagram by taking each of the parking lots in the area to be predicted as a node, and a distance between each of the parking lots in the area to be predicted as a weight of an edge.

4. The method according to claim 2 or 3, wherein the graph fusion network comprises: an attention network and a graph convolution network; and
inputting the spatial relationship diagram, the first feature and the second feature into the graph fusion network comprises:

obtaining an output result weighted by attention by inputting the spatial relationship diagram, the first feature and the second feature into the graph fusion network; and
inputting the output result and the historical vacancy rates of each of the parking lots into the graph convolution network.

5. The method according to any one of claims 1 to 4, wherein the parking space vacancy rate prediction model further comprises: an environmental feature extraction network;
wherein before inputting the fusion feature into the result prediction network, the method further comprises:

acquiring environmental information of each of the parking lots in the area to be predicted before the moment to be predicted, wherein the environmental information at least comprises weather information and holiday information; and
obtaining an environmental feature by inputting the environmental information into the environmental feature extraction network; and
wherein inputting the fusion feature into the result prediction network further comprises:
inputting the first feature, the fusion feature, the environmental feature and the historical vacancy rates of each of the parking lots into the result prediction network.

6. The method according to any one of claims 1 to 5, wherein the parking space vacancy rate prediction model is trained by:

acquiring parking space vacancy rates of each of parking lots in a designated area for at least two historical moments;
taking a parking space vacancy rate of each of the parking lots at a latest historical moment among the at least two historical moments as a label, and taking a parking space vacancy rate of each of the parking lots at other historical moments as a sample;
obtaining a sample feature by inputting the sample into the feature extraction network, wherein the sample feature is used to characterize a relationship between the historical vacancy rate of each of the parking lots and time;
constructing a spatial relationship diagram among each of the parking lots in the designated area as a sample spatial relationship diagram;
obtaining a sample fusion feature by inputting the sample spatial relationship diagram and the sample feature into the graph fusion network;
obtaining a prediction result of each of parking space vacancy rates in the designated area at the latest historical moment by inputting the sample fusion feature into the result prediction network; and
training the parking space vacancy rate prediction model with an objective of minimizing a difference between the prediction result of each of the parking space vacancy rates and the label.

7. An apparatus for predicting a parking space vacancy rate, a pre-trained parking space vacancy rate prediction model being deployed in the apparatus for predicting the parking space vacancy rate, and the parking space vacancy rate prediction model comprising a feature extraction network, a graph fusion network and a result prediction network, the apparatus comprising:

a determining module, configured to determine an area to be predicted and a moment to be predicted;
an acquiring module, configured to acquire parking space vacancy rates of each of parking lots in the area to be predicted at a plurality of moments before the moment to be predicted as historical vacancy rates of each of the parking lots;

a first input module, configured to input the historical vacancy rates of each of the parking lots into the feature extraction network to obtain a first feature, wherein the first feature is used to characterize a time-dependent relationship in the historical vacancy rates of each of the parking lots;

a constructing module, configured to construct a spatial relationship diagram among each of the parking lots in the area to be predicted;

a second input module, configured to input the spatial relationship diagram and the first feature into the graph fusion network to obtain a fusion feature; and

an output module, configured to input the fusion feature into the result prediction network to obtain a parking space vacancy rate of each of the parking lots in the area to be predicted at the moment to be predicted.

8. The apparatus according to claim 7, wherein the first input module is specifically configured to input the historical vacancy rates of each of the parking lots into the feature extraction network to obtain a second feature, wherein the second feature is used to characterize similarities of the historical vacancy rates of each of the parking lots; and input the spatial relationship diagram, the first feature and the second feature into the graph fusion network.

9. The apparatus according to claim 7 or 8, wherein the constructing module is specifically configured to construct the spatial relationship diagram by taking each of the parking lots in the area to be predicted as a node, and a distance between each of the parking lots in the area to be predicted as a weight of an edge.

10. The apparatus according to claim 8 or 9, wherein the graph fusion network comprises: an attention network and a graph convolution network; and

the second input module is specifically configured to input the spatial relationship diagram, the first feature and the second feature into the graph fusion network to obtain an output result weighted by attention; and input the output result and the historical vacancy rates of each of the parking lots into the graph convolution network.

11. The apparatus according to any one of claims 7 to 10, wherein the parking space vacancy rate prediction model further comprises: an environmental feature extraction network;

the apparatus further comprises: an environmental information input module;

the environmental information input module is specifically configured to acquire environmental information of each of the parking lots in the area to be predicted before the moment to be predicted as environmental information of each of the parking lots, wherein the environmental information at least comprises weather information and holiday information; and input the environmental information into the environmental feature extraction network to obtain an environmental feature; and

the output module is specifically configured to input the first feature, the fusion feature, the environmental feature and the historical vacancy rates of each of the parking lots into the result prediction network.

12. The apparatus according to any one of claims 7 to 11, wherein the apparatus further comprises: a training module; and

wherein the training module is specifically configured to

acquire parking space vacancy rates of each of parking lots in a designated area for at least two historical moments;

take a parking space vacancy rate of each of the parking lots at a latest historical moment among the at least two historical moments as a label, and take a parking space vacancy rate of each of the parking lots at other historical moments as a sample;

obtain a sample feature by inputting the sample into the feature extraction network, wherein the sample feature is used to characterize a relationship between the historical vacancy rate of each of the parking lots and time;

construct a spatial relationship diagram among each of the parking lots in the designated area as a sample spatial relationship diagram;

obtain a sample fusion feature by inputting the sample spatial relationship diagram and the sample feature into the graph fusion network;

obtain a prediction result of each of parking space vacancy rates in the designated area at the latest historical moment by inputting the sample fusion feature into the result prediction network; and

train the parking space vacancy rate prediction model with an objective of minimizing a difference between the prediction result of each of the parking space vacancy rates and the label.

13. A computer-readable storage medium, wherein the storage medium stores a computer program which, when executed by a processor, realizes the method according to any one of claims 1 to 6.

14. An electronic device, comprising a memory, a processor and a computer program stored in the memory and executable on the processor, wherein the processor implements the method according to any one of claims 1 to 6 when executing the program.

S100

Determine an area to be predicted and a moment to be predicted

S102

Acquire parking space vacancy rates of each of parking lots in the area to be predicted at a plurality of moments before the moment to be predicted as historical vacancy rates of each parking lot

S106

Construct a spatial relationship diagram among each parking lot in the area to be predicted

S104

Obtain a first feature by inputting the historical vacancy rates of each parking lot into the feature extraction network, where the first feature characterize a time-dependent relationship in the historical vacancy rates of each parking lot

S108

Obtain a fusion feature by inputting the spatial relationship diagram and the first feature into the graph fusion network

S110

Obtain a parking space vacancy rate of each parking lot in the area to be predicted at the moment to be predicted by inputting the fusion feature into the result prediction network

FIG. 1

Parking space vacancy rate prediction model

| Feature extraction network | Graph fusion network | Result prediction network |

FIG. 2

W1=3

W3=5

W2=4

FIG. 3

FIG. 4

FIG. 5

## INTERNATIONAL SEARCH REPORT

| International application No. |
|---|
| **PCT/CN2023/104984** |

**A. CLASSIFICATION OF SUBJECT MATTER**

G08G1/14(2006.01)i

According to International Patent Classification (IPC) or to both national classification and IPC

**B. FIELDS SEARCHED**

Minimum documentation searched (classification system followed by classification symbols)

IPC:G08G1

Documentation searched other than minimum documentation to the extent that such documents are included in the fields searched

Electronic data base consulted during the international search (name of data base and, where practicable, search terms used)

CNTXT, ENTXTC, VEN, CJFD, CNKI, IEEE: 泊车, 停车, 泊位, 车位, 预测, 预估, 估计, 时间, 空间, 时空, 历史, 融合, 图, 卷积, 相似度, 相似性, 注意力, 空闲, 空置, 可用, 环境, 天气, 节假日, 工作日, parking, space, lot, CNN, Attention, GCN, predict, similar, temporal, spatial

**C. DOCUMENTS CONSIDERED TO BE RELEVANT**

| Category* | Citation of document, with indication, where appropriate, of the relevant passages | Relevant to claim No. |
|---|---|---|
| X | CN 111325382 A (BEIJING BAIDU NETCOM SCIENCE AND TECHNOLOGY CO., LTD.) 23 June 2020 (2020-06-23) description, paragraphs 72-161, and figures 1-4 | 1, 3, 6-7, 9, 12-14 |
| X | CN 111310987 A (BEIJING BAIDU NETCOM SCIENCE AND TECHNOLOGY CO., LTD.) 19 June 2020 (2020-06-19) description, paragraphs 93-220 | 1, 3, 6-7, 9, 12-14 |
| X | CN 115985132 A (HANGZHOU CITY UNIVERSITY) 18 April 2023 (2023-04-18) description, paragraphs 71-116 | 1, 3, 7, 9, 13-14 |
| Y | CN 111325382 A (BEIJING BAIDU NETCOM SCIENCE AND TECHNOLOGY CO., LTD.) 23 June 2020 (2020-06-23) description, paragraphs 72-161, and figures 1-4 | 5, 11 |
| Y | CN 115830848 A (CHONGQING COLLEGE OF ELECTRONIC ENGINEERING) 21 March 2023 (2023-03-21) description, paragraphs 58-113 | 5, 11 |

☑ Further documents are listed in the continuation of Box C. ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **05 December 2023** | **21 December 2023** |

| Name and mailing address of the ISA/CN | Authorized officer |
|---|---|
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

| | International application No. |
|---|---|
| | **PCT/CN2023/104984** |

**C.    DOCUMENTS CONSIDERED TO BE RELEVANT**

| Category* | Citation of document, with indication, where appropriate, of the relevant passages | Relevant to claim No. |
|---|---|---|
| Y | CN 111310987 A (BEIJING BAIDU NETCOM SCIENCE AND TECHNOLOGY CO., LTD.) 19 June 2020 (2020-06-19)<br>    description, paragraphs 93-220 | 5, 11 |
| Y | CN 115985132 A (HANGZHOU CITY UNIVERSITY) 18 April 2023 (2023-04-18)<br>    description, paragraphs 71-116 | 5, 11 |
| A | CN 112863235 A (BEIJING ZHILIAN YUNHAI TECHNOLOGY CO., LTD.) 28 May 2021 (2021-05-28)<br>    entire document | 1-14 |
| A | US 2023060713 A1 (CHENGDU QINCHUAN IOT TECHNOLOGY CO., LTD.) 02 March 2023 (2023-03-02)<br>    entire document | 1-14 |
| A | US 2014340242 A1 (BAYERISCHE MOTOREN WERKE AG et al.) 20 November 2014 (2014-11-20)<br>    entire document | 1-14 |
| A | 何坚 等 (HE, Jian et al.). "多维时空因果关系学习的停车泊位占用率预测技术 (Prediction Technology for Parking Occupancy Rate Based on Multidimensional Spatial-Temporal Causality Learning)"<br>北京工业大学学报 (Journal of Beijing University of Technology),<br>Vol. 46, No. 01, 31 January 2020 (2020-01-31), pages 17-23<br>ISSN: 0254-0037,<br>    sections 1-3 | 1-14 |

Form PCT/ISA/210 (second sheet) (July 2022)

INTERNATIONAL SEARCH REPORT
Information on patent family members

International application No.

**PCT/CN2023/104984**

| Patent document cited in search report | | | Publication date (day/month/year) | Patent family member(s) | | | Publication date (day/month/year) |
|---|---|---|---|---|---|---|---|
| CN | 111325382 | A | 23 June 2020 | US | 2021232986 | A1 | 29 July 2021 |
| | | | | US | 11574259 | B2 | 07 February 2023 |
| | | | | CN | 111325382 | B | 28 June 2022 |
| CN | 111310987 | A | 19 June 2020 | US | 2021232588 | A1 | 29 July 2021 |
| | | | | US | 11593384 | B2 | 28 February 2023 |
| | | | | CN | 111310987 | B | 07 April 2023 |
| CN | 115985132 | A | 18 April 2023 | None | | | |
| CN | 115830848 | A | 21 March 2023 | None | | | |
| CN | 112863235 | A | 28 May 2021 | CN | 112863235 | B | 27 May 2022 |
| US | 2023060713 | A1 | 02 March 2023 | CN | 115643285 | A | 24 January 2023 |
| US | 2014340242 | A1 | 20 November 2014 | US | 9652986 | B2 | 16 May 2017 |
| | | | | DE | 102012201472 | A1 | 01 August 2013 |
| | | | | WO | 2013113588 | A1 | 08 August 2013 |
| | | | | CN | 104169990 | A | 26 November 2014 |
| | | | | CN | 104169990 | B | 11 July 2017 |

Form PCT/ISA/210 (patent family annex) (July 2022)